# EUROPEAN PATENT SPECIFICATION

(11) **EP 4 504 816 B1**
(45) Date of publication and mention of the grant of the patent: **18.03.2026**
(21) Application number: 24725303.2
(22) Date of filing: 12.04.2024
(51) Int. Cl.: C08G 18/61, C08G 18/71, C08G 77/26, C08G 77/388, C01B 32/30, C07F 7/18

(54) **METHOD FOR DECOLORIZING CYANOETHYLTRIMETHOXYSILANE**
VERFAHREN ZUR ENTFÄRBUNG VON CYANOETHYLTRIMETHOXYSILAN
PROCÉDÉ DE DÉCOLORATION DE CYANOÉTHYLTRIMÉTHOXYSILANE

(30) Priority: 07.06.2023 US 202363471512 P
(43) Date of publication of application: 12.02.2025
(73) Proprietor: Dow Silicones Corporation, Midland, Michigan 48641-1967 (US)
(72) Inventor: DEPIERRO, Michael, Midland, Michigan 48640 (US); CHARBONNEAU, James, Midland, Michigan 48640 (US); PANAH, Reza, Midland, Michigan 48640 (US)
(74) Representative: Elkington and Fife LLP
(86) International application number: PCT/US2024/024364
(87) International publication number: WO 2024/253756

(56) References cited:
- WO-A1-03/055836
- WO-A1-2007/024792
- WO-A1-2023/044087

## Description

### FIELD

A method for reducing color of cyanoethyltrimethoxysilane is provided. More particularly, the method involves treatment of yellow colored cyanoethyltrimethoxysilane with activated carbon.

### INTRODUCTION

Cyanoethyltrimethoxysilane (CETMS) is useful as an adhesion promoter or a coupling agent in siloxane compositions, such as room temperature vulcanizable (RTV) polyorganosiloxane sealant compositions. CETMS can be made via hydrosilylation reaction of acrylonitrile with trichlorosilane followed by methoxylation. CETMS can also be made by the hydrosilylation reaction of trimethoxysilane with acrylonitrile. However, these processes suffer from drawbacks including that CETMS is typically a colored liquid. For example, cyanoethyltrimethoxysilane from Gelest, Inc. of Morrisville, Pennsylvania, USA is a strawcolored liquid.
WO03055836 is concerned with a polycarboxylic acid mixture having a 1,3,6-hexanetricarboxylic acid content of 80 wt.% or higher, characterized by having a psychometric lightness L of 98 or higher, a chromaticness index a of -2.0 to 2.0, a chromaticness index b of - 2.0 to 3.0, and a nitrogen content of 5,000 wt.ppm or lower.
WO2023044087 is concerned with methods for treating aqueous chelating agent compositions containing one or more nitrilotriacetic acid (NTA) salts with one or more adsorbents, such as activated carbon, two or more activated carbon adsorbent in sequential treatments, to remove the NTA without removing more than 5 wt.%, or more than 3 wt.% or, preferably, more than 1 wt.% of the chelating agent in the aqueous chelating agent compositions.
WO2007024792 is concerned with moisture curable compositions including alkoxy RTV silicones, which have alpha organofunctional groups, and methods for preparing these compositions.

### SUMMARY

A method for removing color from CETMS comprises contacting the CETMS with wood based activated carbon.

### BRIEF DESCRIPTION OF THE DRAWINGS

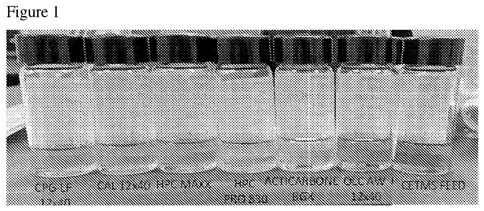

Figure 1 is a photograph of the samples from Example 1. CETMS Feed refers to the untreated starting material. The samples show that when treated using the shaker test under the same conditions, the activated carbon sample ACTICARBONE^{™} BGX removed the most color from the CETMS. Other activated carbons, which were not wood based, did not perform as well.

### DETAILED DESCRIPTION

Cyanoethyltrimethoxysilane (CETMS) used in the method introduced above may be provided by any convenient means. The method for reducing color of CETMS above may optionally further comprise preparing the CETMS before step 1). For example, the CETMS may be prepared by a process comprising hydrosilylation reaction of acrylonitrile with trichlorosilane followed by methoxylation. Alternatively, the CETMS may be prepared by a process comprising hydrosilylation reaction of trimethoxysilane with acrylonitrile. Alternatively, the CETMS may be prepared by a method comprising transterification reaction of cyanoethyltriethoxysilane (CETES) with methanol, wherein the CETES may be prepared by hydrosilylation reaction of trichlorosilane and acrylonitrile to make cyanoethyltrichlorosilane, followed by ethoxylation of the cyanoethyltrichlorosilane (with ethanol). Without wishing to be bound by theory, it is thought that impurities that impart color to the CETMS may be a result of the hydrosilylation reactions described above.

More specifically, the transesterification reaction process for making CETMS may comprise:
*1)* combining starting materials comprising (A) the cyanoethyltriethoxysilane (CETES), (B) the methanol, in a stoichiometric excess, and (C) the acid catalyst; thereby producing a transesterification reaction mixture; optionally
*2)* adding (D) activated carbon to the transesterification reaction mixture;
*3)* removing materials comprising methanol, ethanol and (C) the acid catalyst from the transesterification reaction mixture; and
*4)* repeating steps *1)* to *3)* one or more times (for a total of at least two additions of methanol and (C) acid catalyst and subsequent removal of methanol, ethanol, and catalyst).

In this process for making CETMS, transesterification reaction of CETES and methanol may proceed according to the transesterification reaction scheme shown below. 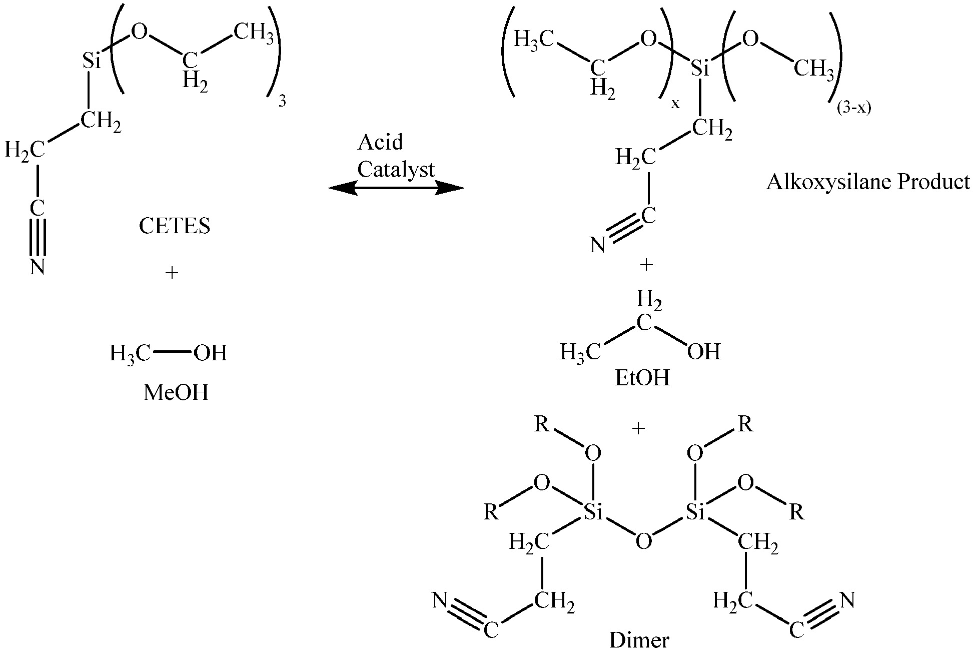 In the formula for the Alkoxysilane Product, when x = 0 the formula is CETMS. However, partially methoxylated species, e.g., cyanoethyl-, diethoxy-, monomethoxy- silane (where x = 2) and/or cyanoethyl-, monoethoxy-, dimethoxy- silane (where x = 1), may also form during the process described herein. In the formula for the Dimer in this reaction scheme, each R is independently selected from the group consisting of methyl and ethyl. The Dimer is a side product that may form during the process described herein, and increasing formation of the Dimer negatively impacts yield of the CETMS. It is desirable to drive the reaction to a high conversion of the ethoxy groups in the CETES to methoxy groups, high purity of CETMS and low amount of Dimer formation.

In step *1)* of the transesterification reaction process to make CETMS described herein, (A) the CETES and (B) the methanol are used in amounts sufficient to provide a stoichiometric excess of methanol. The amounts of (A) the CETES and (B) the methanol may be at least 5:1 (B):(A) (molar ratio), alternatively at least 15:1, while at the same time (B):(A) may be up to 30:1, alternatively up to 15:1. Alternatively, (B):(A) may be 5:1 to 30:1, alternatively > 5:1 to 30:1, and alternatively 15:1 to 30:1. Without wishing to be bound by theory, it is thought that step *1)* may be performed at RT or elevated temperature, such as up to 70 °C. Alternatively, temperature may be 21 °C to 70 °C. Time for the transesterification reaction in step *1)* is sufficient to reach equilibrium. For example, at RT the time may be 1 hour to 4 hours. However, the exact time will depend on various factors such as the temperature selected and the selection and amount of (C) the acid catalyst. Without wishing to be bound by theory, it is thought that performing the transesterification reaction in step *1)* at RT may be efficient in terms of time, energy, and cost associated with heating and cooling. The use of the acid catalyst may provide the benefit of enabling a fast reaction at RT, which minimizes time and operating cost. The reaction may be optionally carried out at elevated temperatures. Furthermore, step *1)* may be performed under conditions that minimize or eliminate the presence of moisture. Without wishing to be bounded by theory, it is thought that moisture contamination may initiate a side reaction of Dimer formation that would take away from CETMS yield, when maximization of CETMS yield is desired.

Starting material (C), the acid catalyst, may be selected from the group consisting of a hydrogen halide, e.g., of formula HX, where X is Cl, Br, or I;, a sulfonic acid (such as toluene sulfonic acid or trifluoromethane sulfonic acid); and an ion exchange resin. Alternatively, (C) the acid catalyst may be the hydrogen halide, and alternatively the acid catalyst may be HCl. When (C) the acid catalyst is the hydrogen halide, e.g., HCl, the hydrogen halide (e.g., HCl) may be used in an amount of at least 1 ppm, alternatively at least 5 ppm, alternatively at least 10 ppm, alternatively at least 30 ppm, while at the same time the amount of hydrogen halide (e.g., HCl) may be up to 100 ppm, alternatively up to 50 ppm, alternatively up to 30 ppm, based on weight of (A) the CETES and weight of (B) the MeOH combined. Alternatively, the amount of hydrogen halide (e.g., HCl) may be 10 ppm to 100 ppm, alternatively 10 ppm to 50 ppm, and alternatively 30 ppm, on the same basis. Alternatively, when the ion exchange resin is used, the amount may be at least 0.1% of solid to liquid, alternatively at least 0.5% while at the same time the amount may be up to 30%, on the same basis. Alternatively, the amount of ion exchange resin may be 0.1% to 30%.

The starting materials used in the step *1)* of the process are known in the art and are commercially available. CETES is available as a straw colored liquid from Gelest Inc. of Morrisville, Pennsylvania, USA, and CETES is available as a yellow liquid from TCI America. MeOH and HCl are available from various sources including Sigma-Aldrich, Inc. of St. Louis, Missouri, USA. Ion exchange resins may be strong and weak acid cation exchange resins where the ionic form of the resin is not hydrogen (H+) for use herein. Such ion exchange resins are commercially available, for example, DOWEX^{™} Monosphere 2030, DOWEX^{™} MARATHON^{™} 1200 (Na+ form), and AMBERLITE IR122 Na are commercially available from TDCC.

Combining the starting materials in step *1)* of the transesterification reaction process may be performed batchwise or continuously and by any convenient means, such as mixing. Mixing may be performed in conventional equipment, such as a batch reactor equipped with an agitator and optionally heating means, such as a jacket. Alternatively, the process may be performed in packed bed reactor, e.g., where the reactor may be packed with (C) the acid catalyst when a solid catalyst is used, e.g., the ion exchange resin, and/or when step *2)* is present, e.g., activated carbon is used.

Step *2)* of the process comprises combining (D) activated carbon and the transesterification reaction mixture prepared in step *1).* Step *2)* is optional. However, when used, step *2)* may be performed at RT, for example, by mixing the activated carbon with the transesterification reaction mixture prepared in step *1)* for a time sufficient to adsorb acid HCl therefrom. The exact time depends on various factors, such as size of the vessel used for step 2), (which may be the same as the reactor used in step *1)*,) however, the time may be at least 1 hour, alternatively at least 2 hours, alternatively at least 4 hours, alternatively at least 8 hours, and alternatively at least 16 hours; while concurrently the time may be up to 48 hours, alternatively up to 24 hours, and alternatively up to 16 hours. Step 2) may be performed under conditions that minimize or eliminate moisture to prevent Dimer formation and to maximize yield of CETMS.

When step 2) is present, (D) the activated carbon may be selected from the group consisting of (D1) bituminous coal activated carbon, (D2) coconut activated carbon with an iodine number ≥ 1200 mg/g, and (D3) a combination of both (D1) and (D2). The (D1) bituminous coal activated carbon and (D2) coconut activated carbon are known in the art and are commercially available from various sources, such as General Carbon Corporation of Paterson, New Jersey, USA, or Calgon Carbon of Pittsburgh, Pennsylvania, USA. The bituminous coal activated carbon may have an iodine number of at least 500 mg/g (min), alternatively at least 600 mg/g (min), alternatively at least 750 mg/g (min), alternatively at least 850 mg/g (min), alternatively at least 900 mg/g (min), while at the same time the bituminous coal activated carbon may have an iodine number up to 1200 mg/g (min), alternatively up to 1,100 mg/g (min), alternatively up to 1,000 mg/g (min), and alternatively up to 950 mg/g (min). Alternatively, iodine number of the bituminous coal activated carbon may be 600 mg/g (min) to 1200 mg/g (min), alternatively 750 mg/g (min) to 1200 mg/g (min), 900 mg/g (min) to 1200 mg/g (min), and alternatively 900 mg/g (min) to 1050 mg/g (min). Iodine number of the coconut activated carbon may be ≥ 1200 mg/g (min), alternatively 1,200 mg/g (min) to 1,500 mg/g (min), and alternatively 1,200 mg/g (min) to 1,300 mg/g (min).

Examples of bituminous coal activated carbon include GC 12x40, which is a virgin activated carbon which is granular in form with an iodine number of 900 mg/g (min) and a density of 0.47 to 0.53 g/cc and which is commercially available from General Carbon Corporation; and CAL^{™} 12x40 granular activated carbon, which is reagglomerated metallurgical grade bituminous coal with an iodine number of 1000 mg/g (min), and which is commercially available from Calgon Carbon. Other bituminous coal activated carbons from Calgon Carbon include CPG^{™} LF 12 x 40, which has an iodine number of 950 mg/g (min); FILTRASORB^{™} 300M, which has an iodine number of 900 mg/g (min); FILTRASORB^{™} 400M, which has an iodine number of 1000 mg/g (min); HPC MAXX, which has an iodine number 900 mg/g; and SGL 8 x 20, which is a granular activated carbon made from bituminous coal combined with binders and having iodine number 900 (min) mg/g. Coconut activated carbons include OLC Plus 12x30, which has an iodine number of 1200 mg/g (min) and a density of 0.45 g/cc, and OLC Plus 12x30 is also available from Calgon Carbon.

When step 2) is present (i.e., the activated carbon is used), the process may further comprise treating the activated carbon before use in step *2).* Treating may be performed, e.g., to dry the activated carbon (e.g., remove all or a portion of any adsorbed moisture to minimize potential for hydrolysis of the Alkoxysilane Product when the carbon contacts the transesterification reaction mixture). For example, the activated carbon may be heated to a temperature above the boiling point of water (e.g., > 100 °C, alternatively > 100 °C to 200 °C, alternatively 120 °C to 160 °C) for a time sufficient to remove all or a portion of the water, e.g., 1 minute to 24 hours. The activated carbon may be heated at ambient or reduced pressure. The activated carbon may be heated and stored under an inert atmosphere, such as nitrogen, before use in step *2).*

Step *3)* of the process comprises removing materials comprising (excess) unreacted (B) methanol, ethanol (which is produced as a side product), and (C) the acid catalyst from the transesterification reaction mixture. Step *3)* may be performed by any convenient means. Step *3)* may comprise filtration, e.g., to remove solid materials, such as ion exchange resin, when used as (C) the acid catalyst, and/or activated carbon, when step *2)* is present. Step *3)* may also comprise stripping and/or distillation with heating and optionally with reduced pressure, which can remove methanol, ethanol, and liquid acid catalysts, such as HCl.

Step *4)* of the transesterification reaction process to produce CETES comprises repeating steps *1)* to *3)* one or more times. Step *4)* may comprise repeating *1)* to *3)* at least one time, alternatively one to four times. Without wishing to be bound by theory, it is thought that repeating steps *1)* to *3)* too many times (e.g., five or more times (alternatively 5 or more times), for a total of six to seven, or more, additions of methanol and acid catalyst and subsequent removals, may result in undesirably high amounts of the Dimer being formed and/or increased costs that make the process impractical on a commercial scale. Alternatively, step *4)* may comprise repeating steps *1)* to *3)* one or two times, particularly when step *2)* is present. Without wishing to be bound by theory, it is thought that due to thermodynamic equilibrium limitations and higher volatility of methanol than ethanol, during step *3),* (e.g., via stripping and/or distillation) a reverse reaction can occur via reaction of the CETMS (where x = 0 in the formula for the Alkoxylated Product shown above) or partially the methoxylated species (where x = 1 or *2)* with the EtOH side product, which cannot be removed until all or a significant portion of the lower boiling point MeOH is first removed. Furthermore, the inventors surprisingly found that treating the transesterification reaction mixture with activated carbon in step *2)* minimized this reverse reaction. Because each repetition of steps *1)* to *3)* can add cost to the process, it is desirable to minimize the number of repetitions in step *4)* for efficiency, provided yield and purity of the CETMS product is achieved.

The transesterification reaction process described above produces a composition comprising cyanoethyltrimethoxysilane (CETMS), which has formula: 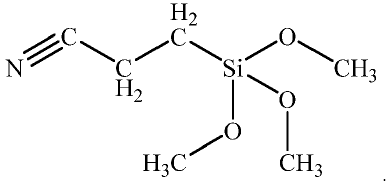 Conversion of the ethoxy groups of the CETES starting material to methoxy groups may be at least 90 GC area %, alternatively at least 91 GC area %, alternatively at least 92 GC area %, alternatively at least 93 GC area %, and alternatively at least 94 GC area %, while at the same time, the conversion may be up to 100 GC area %, alternatively up to 99 GC area %, alternatively up to 98 GC area %, alternatively up to 97 GC area %, and alternatively up to 96 GC area %, as measured by the test method described below and used in the examples. Purity of the CETMS may be at least 72 GC area %, alternatively at least 81 GC area %, alternatively at least 86 GC area %, alternatively at least 89 GC area %, and alternatively at least 90 GC area %, while at the same time purity of the CETMS may be up to 100 GC area %, alternatively up to 98 GC area %, alternatively up to 95 GC area %, alternatively up to 92 GC area %, and alternatively up to 90 GC area %, as measured by the test method described below and used in the examples. The amount of Dimer may be 0, alternatively 1 wt% to 10 wt %, alternatively 1.5 wt% to 9 wt%, alternatively 1.8 wt% to 6 wt%, alternatively 2 wt % to 3 wt%. However, amount of Dimer may vary depending on whether step *2)* is present. For example, amount of dimer may be 1 wt% to 3 wt%, alternatively 1.5 wt% to 2 wt%, and alternatively 1.8 wt% when step *2)* of the process is omitted (no treating agent is used). When the treating agent (e.g., activated carbon) is used, then amount of Dimer may be 5 wt% to 10 wt%, alternatively 6 wt% to 9 wt%.

Alternatively, the transesterification reaction process described above may be modified to produce CETMS which further comprises Dimer. In the transesterification reaction process described above, water may optionally be added in step *1),* e.g., by combining water with the methanol before step *1).* The water is not generally limited, and may be pure (i.e., free from, or substantially free from, minerals and/or other impurities). Alternatively, the water may be processed or unprocessed before its addition in step *1)*, described above. Examples of processes that may be used for purifying the water include distilling, filtering, deionizing, and combinations of two or more thereof, such that the water may be deionized, distilled, and/or filtered. Alternatively, the water may be unprocessed (e.g., may be tap water, i.e., provided by a municipal water system or well water, used without further purification). The water may be utilized in an amount, which will be selected by one of skill in the art, depending on various factors, e.g., the desired amount of Dimer to be formed in the reaction product, the reaction parameters employed, the scale of the reaction, and the species of the acid catalyst selected. However, the amount of the water may be 0.05% to 1% based on weight of (B) the methanol.

This process produces a composition comprising:
an alkoxysilane product of formula 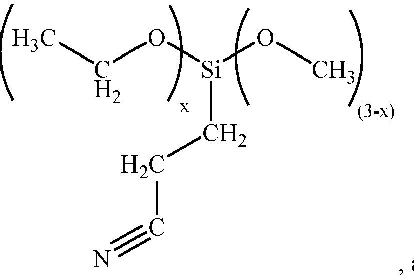 and
a dimer of formula 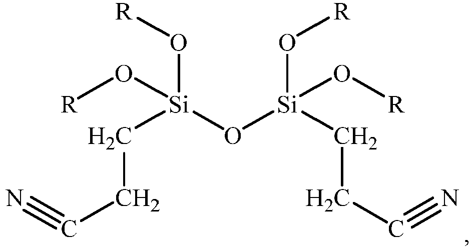 where R and x are as described above. Alternatively, each R may be methyl. Alternatively, each x may be 0. Alternatively, the composition may comprise:
   cyanoethyltrimethoxysilane (CETMS), which has formula: 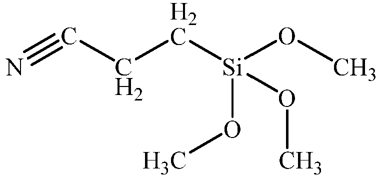 and a dimer thereof, which has formula 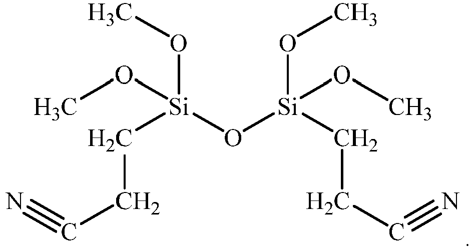
Alternatively, the composition may consist essentially of CETMS and the dimer thereof. Alternatively, the composition may consist of CETMS and the dimer thereof. Alternatively, the composition may be substantially free of, or free of, methoxy groups in the alkoxysilane product and the dimer. In the process described above, conversion of the ethoxy groups of the CETES starting material to methoxy groups may be at least 90 GC area %, alternatively at least 91 GC area %, alternatively at least 92 GC area %, alternatively at least 93 GC area %, and alternatively at least 94 GC area %, while at the same time, the conversion may be up to 100 GC area %, alternatively up to 99 GC area %, alternatively up to 98 GC area %, alternatively up to 97 GC area %, and alternatively up to 96 GC area %, as measured by the test method described below and used in the examples. Purity of the CETMS may be at least 72 GC area %, alternatively at least 81 GC area %, alternatively at least 86 GC area %, alternatively at least 89 GC area %, and alternatively at least 90 GC area %, while at the same time conversion of the ethoxy groups may be up to 100 GC area %, alternatively up to 98 GC area %, alternatively up to 95 GC area %, alternatively up to 92 GC area %, and alternatively up to 90 GC area %, as measured by the test method described below and used in the examples. The amount of Dimer may be at least 20 wt% (based on combined weights of Alkoxysilane Product and Dimer), alternatively 20 wt% to 30 wt %, alternatively 20 wt% to 29 wt%, alternatively 20 wt% to 28 wt%, alternatively 20 wt % to 27 wt%, and alternatively 20 to 26 wt%, on the same basis. Without wishing to be bound by theory, it is thought that when the product comprising Dimer in an amount of 20 wt% to 30 wt% is used in a polyorganosiloxane composition, adhesion of a cured product of said composition may be improved, as compared to a cured product of a composition containing CETMS with a lower amount of Dimer.

The product prepared by any of the processes described above comprises CETMS that typically has a straw to yellow color, i.e., b* value ≥ 38, alternatively 38 to 60, according to the color measurement in the Examples below.

There is an industry need for adhesion promoters and coupling agents that are colorless, or that have low color value (i.e., b* value < 38, alternatively b* value of 0 to 10, as measured by the color measurement described in the examples below), such that these additives do not detrimentally affect the color of the desired product. For certain (e.g., colorless or white polyorganosiloxane compositions), it is undesirable to include colored (e.g., straw or yellow colored) components that may detrimentally impact appearance of the final cured polyorganosiloxane product, such as a sealant. The method of this invention is used to reduce the b* value of CETMS to < 38, alternatively < 10, alternatively to a value of 0 to 10.

### Method for Reducing Color of CETMS

The method for reducing color of cyanoethyltrimethoxysilane (CETMS) comprises:
1) contacting CETMS having a color b* value ≥ 38 and wood based activated carbon for a time sufficient to reduce the b* of the CETMS to < 38, and
2) separating the wood based activated carbon from the cyanoethyltrimethoxysilane.

The method for removing color from CETMS introduced above includes step 1), which comprises contacting the CETMS having a b* value ≥ 38 (and which can be prepared by any of the processes described above), and wood based activated carbon. Contacting the CETMS and the wood based activated carbon may be performed by any convenient means. For example, a continuous mode may comprise pumping the CETMS through a vessel, such as a drum or bed, that contains a packed bed of the wood based activated carbon. The size of the bed may be sufficient to reduce b* value to < 38 after one pass, alternatively, multiple passes may be used to reduce b* value to < 38, alternatively < 20, alternatively < 18, alternatively ≤ 10, alternatively < 10, and alternatively 0 to 10. Alternatively, in a batch mode the wood based activated carbon may be added to the CETMS, e.g., in the vessel used to prepare the CETMS, and thereafter said wood based activated carbon may be removed, e.g., by filtration. This may be repeated one or more times until the CETMS has a b* value as described above. The amount of wood based activated carbon depends on various factors including the b* value of the CETMS to be treated and whether a continuous or batch mode will be used. For example, step 1) may comprise mixing the 93 wt% to 99 wt% CETMS and 1 wt% to 7 wt% of the wood based activated carbon in the batch mode.

The wood based activated carbon used to remove color from the CETMS differs from the bituminous coal or coconut activated carbon used in the transesterification reaction process for making CETMS described above. Wood based activated carbon, which may be referred to as activated carbon of vegetal origin depending on the brand selected, is useful in the present invention. Said wood based activated carbon may have within the pore structure phosphoric acid. Optionally, the wood based activated carbon is activated with phosphoric acid before step 1). Wood based activated carbon produced with phosphoric acid activation is commercially available from various sources, such as ACTICARBONE^{™} BGE and ACTICARBONE^{™} BGX products from Calgon Carbon Corporation and NORIT^{™} CNSP and NORIT^{™} C Gran from Norit Activated Carbon of Marshall, Texas, USA. Phosphoric acid activation can yield carbon with a very high surface area, ranging from 1500-2500 m²/g, and this is commercially available in granular, pelletized, or powder forms from various sources including Calgon Carbon Corporation or Carbon Activated Corp. of Compton, California, USA. The wood based activated carbon may have an iodine number > 600 (alternatively > 600 to 1500) or a molasses number of > 150. The wood based activated carbon may have an apparent density of 0.22 g/cm³ to 0.24 g/cm³.

The method for removing color from the CETMS may optionally further comprise one or more additional steps. For example, the method may optionally further comprise drying the wood based activated carbon before contacting with the CETMS in step 1).

Step 2) of the method described above may be performed by any convenient means For example, step 2) may comprise filtering the CETMS after step 1), thereby removing the wood based activated carbon.

### Method of Use

The CETMS having a color value b* < 38, alternatively 0 to 10, produced as described above may be used in a polyorganosiloxane composition, such as a room temperature vulcanizable organopolysiloxane composition. RTV organopolysiloxane compositions are known in the art, such as those disclosed in U.S. Patent 4,483,973 to Lucas, et al.; U.S. Patent 5,962,559 to Lucas, et al.; U.S. Patent 7,550,548 to Hatanaka, et al.; U.S. Patent 7,674,871 to Koch, et al.; U.S. Patent Application Publication 2007/0173597 to Williams, et al.; and PCT Patent Application Publication WO2007/024792. The CETMS may function as an adhesion promoter, a coupling agent, and/or a crosslinking agent in a polyorganosiloxane composition. Alternatively, the reaction product may be added to a commercially available RTV sealant, such as XIAMETER^{™} SLT-5200 from TDCC. Without wishing to be bound by theory, it is thought that the polyorganosiloxane composition containing the CETMS prepared described herein may be useful in white or colorless sealants due to the low b* color value of the CETMS.

### EXAMPLES

Adsorbents were obtained and prepared as follows: Adsorbents as received from vendors had varying concentrations of moisture.

**Table 1 - Adsorbents and CETES Feed**

| Adsorbent | Description | Source |
|---|---|---|
| ACTICARBONE^{™} BGX | Granular wood based activated carbon with acidic pH (5), N2-BET specific surface of adsorption 1650 m²/g, ash content of 2.5% and density in place of 0.24 g/cm³. | Calgon Carbon Corporation of Moon Township Pennsylvania, USA |
| HPC PRO 830 | Bituminous coal based activated carbon with Iodine number: 800 | Calgon Carbon Corporation |
| CAL 12X40 | Bituminous coal based activated carbon with Iodine number: 1000 | Calgon Carbon Corporation |
| HPC MAXX | Bituminous coal based activated carbon with Iodine number:900 | Calgon Carbon Corporation |
| CPG-LF 12X40 | Acid washed granular bituminous coal based activated carbon with Iodine number: 950 | Calgon Carbon Corporation |
| OLC AW 12X40 | Acid washed granular coconut-based activated carbon with iodine number:1050, Acid washed | Calgon Carbon Corporation |
| FEED | CETMS | The Dow Chemical Company, produced via the transesterification process described above |
| CNSP | Wood-based activated carbon | Norit Activated Carbon |
| C GRAN | Wood-based activated carbon chemically activated with phosphoric acid with apparent density of 0.23 g/cm³ | Norit Activated Carbon |

All adsorbents were consistently dried at 130 °C in a vacuum oven for 16 hours. Once dried, adsorbents were removed from the hot oven and placed into jars. The jars were then stored in a dry box.

In this Example 1, adsorbents were screened in a shaker test, as follows: Using an adsorbent that was dried and stored in the dry box, based on the desired ratio of solid to liquid, the adsorbent was weighed and added to a glass vial in a hood. Then the CETMS was added to the vial. Once the addition was complete, the vials were then placed on a wrist shaker and allowed to shake for 24 hours.

After shaking for 24 hours, the vials were placed back inside the hood. The treated CETMS were analyzed to determine the effect of the adsorbent, as follows: A 5 mL syringe with a thread on 0.45-micron filter was used to strain the contents of each vial. The effluent from the filter was a clear liquid free of adsorbent fines. The clear liquid was sent for color testing.

Color measurements were performed with a Konica Minolta CM-5 Spectrophotometer with C-illuminant and 2° observer. Color is reported in L*, a*, and b* measurements. The primary measurement used is b* which measures blue and yellow, where a higher b* is a more yellow color. Also recorded are L* and a* values, where L* is a measure of lightness with 100 being the lightest, and a* measures green and red color, where a positive number is red and a negative number is green.

Table 1, shows the color results for different activated carbons with the same solid to liquid ratio i.e., 3% solid, 97% liquid. As can be seen in Table 2, Acticarbone^{™} BGX which is an acidic wood based activated carbon showed the lowest b value (Least Yellow).

**Table 2 - Color Measurements**

| Adsorbent | Liquid | Adsorbent mass (g) | Liquid Mass (g) | Shake Time (hr) | Color | | |
|---|---|---|---|---|---|---|---|
| | | | | | L*(C) | a*(C) | b*(C) |
| ACTICARBONE^{™} BGX | CETMS | 0.3139 | 10.2339 | 24 | 95.8 | -3.35 | 17.82 |
| HPC PRO 830 | CETMS | 0.3194 | 10.1271 | 24 | 94.54 | -4.7 | 31.49 |
| CAL 12X40 | CETMS | 0.3361 | 10.0341 | 24 | 92.7 | -4.04 | 36.94 |
| HPC MAXX | CETMS | 0.3322 | 10.0841 | 24 | 90.63 | -3.66 | 39.63 |
| CPG-LF 12X40 | CETMS | 0.3145 | 10.1096 | 24 | 91.67 | -3.8 | 40.57 |
| OLC AW 12X40 | CETMS | 0.3056 | 10.114 | 24 | 86.24 | -1.08 | 53.77 |
| FEED (control), no adsorbent | CETMS | | 10 | | 76.15 | 3.43 | 57.85 |

In this Example 2, shaker tests were performed as described in Example 1, but varying the amounts of activated carbon and CETMS. The activated carbons, amounts, and color test results are shown below in Table 3. The data in Table 3 show that 7% ACTICARBONE BGX provided better color reduction than 10% and 12% CAL 12X40 under otherwise identical treatment conditions.

**Table 3 - Shaker Test Results with Varying Amounts of Activated Carbon**

| Adsorbent | Liquid | Adsorbent - Mass (g) | Liquid - Mass (g) | Shake Time (hr) | Color | | |
|---|---|---|---|---|---|---|---|
| | | | | | L*(C) | a*(C) | b*(C) |
| ACTICARBONE BGX (0.5% Solid to Liquid) | CETMS | 0.0511 | 10.050 | 24 | 90.44 | -3.35 | 44.69 |
| ACTICARBONE^{™} BGX (1% Solid to Liquid) | CETMS | 0.1037 | 10.078 | 24 | 92.37 | -4.1 | 37.03 |
| ACTICARBONE^{™} BGX (7% Solid to Liquid) | CETMS | 0.7012 | 10.115 | 24 | 98.86 | -1.94 | 8.32 |
| CAL 12X40 10% Solid to Liquid) | CETMS | 1.0109 | 10.0339 | 24 | 94.86 | -4.05 | 27.64 |
| CAL 12X40 (12% Solid to Liquid) | CETMS | 1.2109 | 10.0633 | 24 | 95.09 | -4.01 | 26.5 |
| FEED (control) with no adsorbent | CETMS | | 10 | | 76.15 | 3.43 | 57.85 |

In this Example 3, shaker tests were performed as described in Example 1, but with different wood based activated carbons and bituminous coal based activated carbon CAL 12x40, each at 3% loading. The activated carbons tested and the results are in Table 4. The data in Table 4 show that all of the wood based activated carbons tested provided better color reduction than the bituminous coal based activated carbon, under otherwise identical conditions.

**Table 4 - Bituminous Coal Based Activated Carbon vs. Wood Based Activated Carbon Shaker Test Results**

| Adsorbent | b*(C) | Activated Carbon Type | Adsorbent - Mass (g) | Liquid - Mass (g) | Example Type |
|---|---|---|---|---|---|
| BGX 3.0% | 16.11 | Wood-based Carbon | 0.2117 | 7.116 | Inventive |
| CNSP 3.0% | 26.33 | Wood-based Carbon | 0.2168 | 7.086 | Inventive |
| CGRAN 3.0% | 27.71 | Wood-based Carbon | 0.2125 | 7.027 | Inventive |
| CAL 12X40 3.0% | 39.3 | Bituminous coal | 0.2113 | 7.933 | comparative |
| Feed | 56.42 | | | 7 | |

In this Example 4, shaker tests were performed as described in Example 1, but with differing amounts of activated carbons, shown below in Table 5. The data in Table 5 shows that ACTICARBONE BGX provided superior color reduction to CAL 12X40 at each loding tested.

**Table 5**

| Adsorbent | b*(C) | Activated Carbon Type | Adsorbent - Mass (g) | Liquid - Mass (g) | Example Type |
|---|---|---|---|---|---|
| BGX 7.0% | 7.74 | Wood-based Carbon | 0.4906 | 7.042 | Inventive |
| CAL 12X40 7.0% | 36.02 | Bituminous coal | 0.4907 | 7.018 | comparative |
| BGX 1.0% | 33.89 | Wood-based Carbon | 0.0711 | 7.056 | Inventive |
| CAL 12X40 1.0% | 46.98 | Bituminous coal | 0.0706 | 7.003 | comparative |
| BGX 0.5% | 42.14 | Wood-based Carbon | 0.0366 | 7.084 | Inventive |
| CAL 12X40 0.5% | 50.89 | Bituminous coal | 0.0367 | 7.265 | comparative |
| Feed (control) no adsorbent | 58.63 | | | 7 | |

In this Example 5, a single pass continuous process for removing color from CETMS was modeled as follows: A column with 18 inch (45.72 cm) length and 3 inch (7.62 cm) diameter (length/diameter, L/D ratio = 6) was packed with an activated carbon. CETMS with a color value of b* = 38 was pumped to the column inlet at 50 g/min. Samples were collected at the column outlet and analyzed for color. The operating conditions are shown below in Table 6.

**Table 6 - Single Pass Column Experiments**

| Experiment | 5-1 | 5-2 |
|---|---|---|
| Adsorbent | ACTICARBONE BGX | CAL 12X40 |
| Mass of carbon packed in column (g) | 474.3 | 1003.8 |

The column packed with ACTICARBONE^{™} BGX provided better color reduction than the column packed with CAL 12X40, even though (due to density differences) the column containing CAL 12X40 housed more than twice the mass of activated carbon than the column containing ACTICARBONE^{™} BGX. Samples were taken from the column effluent at various times, and color was measured as described above. The results are in Table 7, below.

**Table 7 - Color Results from Single Pass Continuous process**

| Adsorbent | BGX |
|---|---|
| Time [hr] | b*(C) |
| 0.90 | 7.18 |
| 1.42 | 6.52 |
| 1.92 | 7.34 |
| 2.62 | 8.64 |
| 3.93 | 11.29 |
| 4.45 | 12.17 |
| 4.93 | 12.84 |

| Adsorbent | Cal 12x40 |
|---|---|
| Time [hr] | b*(C) |
| 0.73 | 6.97 |
| 1.22 | 8.73 |
| 1.52 | 9.75 |
| 2.22 | 12.73 |
| 2.70 | 13.66 |
| 3.58 | 14.86 |
| 4.58 | 15.78 |
| 5.42 | 16.46 |

The data in Table 7 show that the ACTICARBONE^{™} BGX used in Experiment 5-1 provided better color reduction than the CAL 12X40 used in Experiment 5-2, even though a greater mass of CAL 12X40 activated carbon was used as compared to that in Experiment 5-1. These data indicate that not only does the ACTICARBONE^{™} BGX provide better color reduction than the CAL 12X40, but the process can be run longer before needing to replace or regenerate the activated carbon when the ACTICARBONE^{™} BGX is used.

### Test Methods

Gas Chromatography (GC) was used to verify compositions of materials. All reported compositions in the examples above were based on GC area%. An Agilent 7890A GC System with helium carrier gas and an FID detector was used with Restek Rtx-1 30m x 0.25 mm x 1 um. Flow rate was set at a constant flow of 1.5 mL/min. The gradient began at 40°C for 2 min, then ramped at 20°C/min to 260°C. The final temperature of 260°C was held for 2 min.
Other conditions used wer:e
1. Injection volume of 1 uL
2. Needle washing with acetonitrile for Solvent A and B Washes
3. Split/splitless inlet temperature and FID temperature of 260 °C
4. Split injection with a split ratio of 50:1

Titrations were performed with a Metrohm Brinkmann 776 Dosimat to determine chloride level with BCP indicator and 0.1N KOH.

### Industrial Applicability

CETMS is useful as an adhesion promoter or coupling agent in polyorganosiloxane compositions, such as room temperature vulcanizable polyorganosiloxane sealant compositions. However, CETMS is not widely commercially available, and the CETMS that is available typically suffers from the drawback of having straw or yellow color. There is an industry need for polyorganosiloxane compositions that contain CETMS to cure to form colorless or white cured products. Therefore, it is desirable to provide CETMS with low or no color, i.e., a b* value of 0 to 10 according to the color measurement described in the Examples above.

### DEFINITIONS AND USAGE OF TERMS

The amounts of all starting materials in a composition total 100 % by weight. All amounts, ratios, and percentages are by weight, unless otherwise indicated by the context of the specification. The articles 'a', 'an', and 'the' each refer to one or more, unless otherwise indicated by the context of specification. The singular includes the plural unless otherwise indicated by the context of the specification. Each embodiment or alternative presented herein may be combined with any other embodiment or alternative. The term "comprising" and derivatives thereof, such as "comprise" and "comprises" are used herein in their broadest sense to mean and encompass the notions of "including," "include," "consist(ing) essentially of," and "consist(ing) of. The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples.

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Abbreviations used in this application are defined below in Table 8.

**Table 8 - Abbreviations**

| Abbreviation | Definition |
|---|---|
| AN | acid number |
| °C | degrees Celsius |
| cc | cubic centimeter |
| CETES | cyanoethyltriethoxysilane |
| CETMS | cyanoethyltrimethoxysilane |
| EtOH | ethanol |
| g | gram |
| GC | gas chromatography |
| HDPE | High density polyethylene |
| hr | hour |
| L | liter |
| M | molar |
| MeOH | methanol |
| mg | milligram |
| mmHg | millimeters of mercury |
| N | normal |
| oz | ounce |
| RT | room temperature of 23 ± 2 °C |
| RTV | room temperature vulcanizable |
| TDCC | The Dow Chemical Company of Midland, Michigan, USA |
| uL | microliter |
| um | micrometer |
| wt | weight |

### Embodiments of the Invention

In a first embodiment, a method for manufacturing CETMS comprises:
I) preparing CETMS by a transesterification reaction process comprising
   *1)* combining starting materials comprising
      (A) cyanoethyltriethoxysilane (CETES),
      (B) methanol, in a stoichiometric excess, and
      (C) an acid catalyst; thereby producing a transesterification reaction mixture;
   optionally 2) adding (D) activated carbon to the transesterification reaction mixture;
   *3)* removing materials comprising methanol, ethanol and (C) the acid catalyst from the transesterification reaction mixture; and
   *4)* repeating steps *1)* to *3)* one or more times (for a total of at least two additions of methanol and (C) acid catalyst and subsequent removal of methanol, ethanol, and catalyst); thereby producing a transesterification reaction product comprising CETMS having a color value b* value ≥ 38;
II) contacting the CETMS having the color value b* > 30 with wood based activated carbon for a time sufficient to reduce the b* of the cyanoethyltrimethoxysilane to < 38; and
III) separating the wood based activated carbon from the cyanoethyltrimethoxysilane.

In a second embodiment, in the method of the first embodiment, step I) further comprises adding water in an amount of 0.05 wt% to 1wt% based on weight of (B) the methanol.

In a third embodiment, in step II) of the method of the second embodiment, the wood based activated carbon is activated with phosphoric acid before step 1).

In a fourth embodiment, in step II) of the method of any of the preceding embodiments, the wood based activated carbon has an iodine number > 600.

In a fifth embodiment, in step II) of the method of any one of the preceding embodiments, the wood based activated carbon has density of 0.22 to 0.24 g/cm³.

In a sixth embodiment, in step II) of the method of any one of the preceding embodiments, the wood based activated carbon comprises ACTICARBONE^{™} BGX, ACTICARBONE^{™} BGE, NORIT^{™} CNSP, NORIT^{™} C Gran, or a combination thereof.

In a seventh embodiment, in the method of any one of the preceding embodiments, step *2)* in the transesterification reaction process is present.

In an eighth embodiment, in the method of the seventh embodiment, the activated carbon added in step 2) is selected from bituminous coal activated carbon and coconut activated carbon.

## Claims

1. A method for reducing color of cyanoethyltrimethoxysilane, wherein the method comprises:
1) contacting cyanoethyltrimethoxysilane having a color b* value ≥ 38 and wood based activated carbon for a time sufficient to reduce the b* of the cyanoethyltrimethoxysilane to < 38, and
2) separating the wood based activated carbon from the cyanoethyltrimethoxysilane.

2. The method of claim 1, where the wood based activated carbon is activated with phosphoric acid before step 1).

3. The method of claim 1 or claim 2, where the wood based activated carbon has an iodine number > 600.

4. The method of any one of claims 1 to 3, where the wood based activated carbon has density of 0.22 to 0.24 g/cm³.

5. The method of any one of claims 1 to 4, where step 1) comprises mixing the 93 wt% to 99 wt% cyanoethyltrimethoxysilane and 1 wt% to 7 wt% of the wood based activated carbon in a batch mode.

6. The method of any one of claims 1 to 4, where step 1) comprises flowing the cyanoethyltrimethoxysilane through a packed bed of the wood based activated carbon in a continuous process.

7. The method of any one of claims 1 to 6, where step 2) comprises filtering the cyanoethyltrimethoxysilane after step 1), thereby removing the wood based activated carbon.

8. The method of any one of claims 1 to 7, where the method further comprises, before step 1), preparing the cyanoethyltrimethoxysilane by a process comprising hydrosilylation reaction of acrylonitrile with trichlorosilane followed by methoxylation.

9. The method of any one of claims 1 to 7, where the method further comprises, before step 1), preparing the cyanoethyltrimethoxysilane by a process comprising hydrosilylation reaction of trimethoxysilane with acrylonitrile.

10. The method of any one of claims 1 to 7, where the method further comprises, before step 1), preparing the cyanoethyltrimethoxysilane by a process comprising: transterification reaction of cyanoethyltriethoxysilane with methanol.

11. The method of claim 10, where the process further comprises adding water, thereby producing a dimer.

12. The method of claim 10 or claim 11, where the transesterification reaction is performed by
i) combining starting materials comprising
(A) cyanoethyltriethoxysilane,
(B) methanol, in a stoichiometric excess,
optionally water, and
(C) an acid catalyst; thereby producing a reaction mixture; and optionally ii) adding to the reaction mixture (D) an activated carbon selected from the group consisting of
(D1) bituminous coal activated carbon,
(D2) coconut activated carbon with an iodine number of at least 1200 mg/g, and
(D3) both (D1) and (D2);
iii) removing materials comprising methanol, ethanol and the acid catalyst from the reaction mixture; and
iv) repeating steps i) to iii) one or more times, thereby forming the reaction product comprising the cyanoethyltrimethoxysilane.

13. The method of claim 11 or claim 12, where (C) the acid catalyst is selected from the group consisting of HCl and an ion exchange resin.

14. The method of claim 12 or claim 13, where in step i), an amount of the water is 0.05 wt% to 1wt% based on weight of (B) the methanol.

## Patentansprüche

1. Verfahren zum Reduzieren der Farbe von Cyanoethyltrimethoxysilan, wobei das Verfahren umfasst:
1) Kontaktieren von Cyanoethyltrimethoxysilan, das einen Farbwert b* ≥38 aufweist, und holzbasierter Aktivkohle für eine Zeit, die ausreicht, um den b*-Wert des Cyanoethyltrimethoxysilans auf < 38 zu reduzieren, und
2) Trennen der holzbasierten Aktivkohle von dem Cyanoethyltrimethoxysilan.

2. Verfahren nach Anspruch 1, wobei die holzbasierte Aktivkohle mit Phosphorsäure vor Schritt 1) aktiviert wird.

3. Verfahren nach Anspruch 1 oder 2, wobei die holzbasierte Aktivkohle eine lodzahl von >600 aufweist.

4. Verfahren nach einem der Ansprüche 1 bis 3, wobei die holzbasierte Aktivkohle eine Dichte von 0,22 bis 0,24 g/cm³ aufweist.

5. Verfahren nach einem der Ansprüche 1 bis 4, wobei Schritt 1) ein Mischen der 93 Gew.-% bis 99 Gew.-% Cyanoethyltrimethoxysilan und zu 1 Gew.-% bis 7 Gew.-% die holzbasierte Aktivkohle in einem Chargenmodus umfasst.

6. Verfahren nach einem der Ansprüche 1 bis 4, wobei Schritt 1) das Fließenlassen des Cyanoethyltrimethoxysilans durch ein Festbett der holzbasierten Aktivkohle in einem kontinuierlichen Prozess geleitet wird.

7. Verfahren nach einem der Ansprüche 1 bis 6, wobei Schritt 2) ein Filtrieren des Cyanoethyltrimethoxysilans nach Schritt 1) umfasst, wodurch die holzbasierte Aktivkohle entfernt wird.

8. Verfahren nach einem der Ansprüche 1 bis 7, wobei das Verfahren ferner vor Schritt 1) ein Herstellen des Cyanoethyltrimethoxysilans durch einen Prozess umfasst, umfassend eine Hydrosilylierungsreaktion von Acrylnitril mit Trichlorsilan gefolgt von Methoxylierung.

9. Verfahren nach einem der Ansprüche 1 bis 7, wobei das Verfahren ferner vor Schritt 1) das Herstellen des Cyanoethyltrimethoxysilan durch einen Prozess umfasst, umfassend eine Hydrosilylierungsreaktion von Trimethoxysilan mit Acrylnitril.

10. Verfahren nach einem der Ansprüche 1 bis 7, wobei das Verfahren ferner vor Schritt 1) das Herstellen des Cyanoethyltrimethoxysilans durch einen Prozess umfasst, umfassend: Umesterungsreaktion von Cyanoethyltriethoxysilan mit Methanol.

11. Verfahren nach Anspruch 10, wobei der Prozess ferner das Hinzufügen von Wasser umfasst, wodurch ein Dimer erzeugt wird.

12. Verfahren nach Anspruch 10 oder 11, wobei die Umesterungsreaktion durchgeführt wird durch i) Kombinieren von Ausgangsmaterialien, umfassend
(A) Cyanoethyltriethoxysilan,
(B) Methanol, in einem stöchiometrischen Überschuss,
optional Wasser, und
(C) einen Säurekatalysator; wodurch eine Reaktionsmischung erzeugt wird; und
optional ii) Hinzufügen, zu der Reaktionsmischung (D), einer Aktivkohle, ausgewählt aus der Gruppe bestehend aus
(D1) Aktivkohle aus Steinkohle,
(D2) Kokosnuss-Aktivkohle mit einer lodzahl von mindestens 1200 mg/g, und
(D3) sowohl (D1) als auch (D2);
iii) Entfernen von Materialien, umfassend Methanol, Ethanol und den Säurekatalysator aus der Reaktionsmischung; und
iv) Wiederholen der Schritte i) bis iii) ein oder mehrere Male, wodurch das Reaktionsprodukt umfassend das Cyanoethyltrimethoxysilan ausgebildet wird.

13. Verfahren nach Anspruch 11 oder 12, wobei (C) der Säurekatalysator aus der Gruppe ausgewählt ist, bestehend aus HCl und einem Ionenaustauscherharz.

14. Verfahren nach Anspruch 12 oder 13, wobei in Schritt i) eine Menge des Wassers 0,05 Gew.-% bis 1 Gew.-%, bezogen auf das Gewicht von (B) dem Methanol, beträgt.

## Revendications

1. Procédé de réduction de couleur du cyanoéthyltriméthoxysilane, dans lequel le procédé comprend :
1) la mise en contact du cyanoéthyltriméthoxy silane ayant une valeur de couleur B* ≥ 38 et du charbon actif à base de bois pendant une durée suffisante pour réduire le B* du cyanoéthyltriméthoxy silane à < 38, et
2) la séparation du charbon actif à base de bois du cyanoéthyltriméthoxysilane.

2. Procédé selon la revendication 1, où le charbon actif à base de bois est activé avec de l'acide phosphorique avant l'étape 1).

3. Procédé selon la revendication 1 ou la revendication 2, où le charbon actif à base de bois a un indice d'iode > 600.

4. Procédé selon l'une quelconque des revendications 1 à 3, où le charbon actif à base de bois a une masse volumique de 0,22 à 0,24 g/cm³.

5. Procédé selon l'une quelconque des revendications 1 à 4, où l'étape 1) comprend le mélange de 93 % en poids à 99 % en poids de cyanoéthyltriméthoxy silane et de 1 % en poids à 7 % en poids du charbon actif à base de bois dans un mode discontinu.

6. Procédé selon l'une quelconque des revendications 1 à 4, où l'étape 1) comprend l'écoulement du cyanoéthyltriméthoxy silane à travers un lit garni de charbon actif à base de bois dans un processus continu.

7. Procédé selon l'une quelconque des revendications 1 à 6, où l'étape 2) comprend la filtration du cyanoéthyltriméthoxy silane après l'étape 1), éliminant ainsi le charbon actif à base de bois.

8. Procédé selon l'une quelconque des revendications 1 à 7, où le procédé comprend en outre, avant l'étape 1), la préparation du cyanoéthyltriméthoxysilane par un processus comprenant une réaction d'hydrosilylation de l'acrylonitrile avec du trichlorosilane suivie d'une méthoxylation.

9. Procédé selon l'une quelconque des revendications 1 à 7, où le procédé comprend en outre, avant l'étape 1), la préparation du cyanoéthyltriméthoxysilane par un processus comprenant une réaction d'hydrosilylation du triméthoxysilane avec de l'acrylonitrile.

10. Procédé selon l'une quelconque des revendications 1 à 7, où le procédé comprend en outre, avant l'étape 1), la préparation du cyanoéthyltriméthoxysilane par un procédé comprenant : la réaction de transtérification du cyanoéthyltri éthoxy silane avec méthanol.

11. Procédé selon la revendication 10, où le processus comprend en outre l'ajout d'eau, produisant ainsi un dimère.

12. Procédé selon la revendication 10 ou la revendication 11, où la réaction de transestérification est effectuée en i) combinant des matériaux de départ comprenant
(A) le cyanoéthyltriéthoxysilane,
(B) le méthanol, dans un excès stœchiométrique,
éventuellement de l'eau, et
(C) un catalyseur acide ; permettant ainsi de produire un mélange réactionnel ; et
éventuellement ii) l'ajout au mélange réactionnel (D) d'un charbon actif choisi dans le groupe constitué de
(D1) charbon actif de houille bitumineuse,
(D2) charbon actif de noix de coco ayant un indice d'iode d'au moins 1200 mg/g, et
(D3) à la fois (D1) et (D2) ;
iii) l'élimination des matériaux comprenant du méthanol, de l'éthanol et le catalyseur acide du mélange réactionnel ; et
iv) la répétition des étapes i) à iii) une ou plusieurs fois, formant ainsi le produit de réaction comprenant le cyanoéthyltriméthoxysilane.

13. Procédé selon la revendication 11 ou la revendication 12, où (C) le catalyseur acide est choisi dans le groupe constitué de HC1 et d'une résine d'échange d'ions.

14. Procédé selon la revendication 12 ou la revendication 13, où à l'étape i), une quantité de l'eau va de 0,05 % en poids à 1 % en poids sur la base du poids du (B) méthanol.
